# EUROPEAN PATENT SPECIFICATION

(11) **EP 3 478 746 B1**
(45) Date of publication and mention of the grant of the patent: **10.06.2020**
(21) Application number: 17731759.1
(22) Date of filing: 12.06.2017
(51) Int. Cl.: C08G 65/334

(54) **PROCESS FOR MAKING POLYETHERS WITH REDUCED AMOUNTS OF UNSATURATED MONOLS**
VERFAHREN ZUR HERSTELLUNG VON POLYETHERN MIT VERRINGERTEN MENGEN AN UNGESÄTTIGTEN MONOLEN
PROCÉDÉS DE PRÉPARATION DE POLYÉTHERS À TENEURS RÉDUITES EN MONOLS INSATURÉS

(30) Priority: 30.06.2016 US 201662356827 P
(43) Date of publication of application: 08.05.2019
(73) Proprietor: Dow Global Technologies, LLC, Midland, MI 48674 (US)
(72) Inventor: TÜRÜNÇ, Oguz, 1530 AA Terneuzen (NL); ADAMS, An, 4530AA Terneuzen (NL); MEINL, Carola, CH-8810 Horgen (CH); MASY, Jean-paul, 4530 AA Terneuzen (NL); VERMAIRE, Sonet, 4530 AA Terneuzen (NL); SCHAEFER, Matthias, 4530 AA Terneuzen (NL); CLAUSSENS, Sven, 4542 NM Hoek Terneuzen 4530 AA (NL)
(74) Representative: Beck Greener LLP
(86) International application number: PCT/US2017/037075
(87) International publication number: WO 2018/005055

(56) References cited:
- WO-A1-2012/095482
- JP-A- H04 209 628
- JP-A- H04 209 629
- US-A- 3 415 902

## Description

This invention relates to methods for making polyethers and for reducing the amount of unsaturated monols in polyethers.

Polyethers are made industrially by polymerizing alkylene oxides. The highest-volume production processes globally perform an anionic polymerization using strong bases such as potassium hydroxide as the polymerization catalyst. Under basic conditions, alkylene oxides can isomerize to form unsaturated alcohols. The unsaturated alcohols act as monofunctional initiators, becoming alkoxylated during the polymerization process to form unsaturated polyether monols. The unsaturated polyether monols have a hydroxyl group at one end of the polyether chain and propenyl or allylic unsaturation at the other end.

The presence of the unsaturated polyether monols can be a significant problem. The highest-volume uses of polyethers are as raw materials to make polyurethanes and other reaction polymers. Polyethers used in these applications must be polyfunctional (i.e., have two or more hydroxyl groups) to produce the necessary high molecular weight, crosslinked polymer network when cured. The unsaturated polyether monols act as chain terminators during the curing reaction. They depress the molecular weight and crosslink density in the final product. This affects physical and other properties in a way that is often undesirable.

For this reason, pains are taken to reduce the amount of unsaturated polyether monols in polyether polyols.

Some methods for doing so focus on preventing the alkylene oxide from isomerizing during the polymerization process. For example, a double metal cyanide (DMC) complex can be used as the polymerization catalyst, instead of a strong base. DMC complexes do not strongly promote the alkylene oxide isomerization reaction, so only small amounts of polyether monols form. Unfortunately, DMC catalysts are not suitable for producing many types of polyether products, are expensive relative to potassium hydroxide, and often do not perform optimally in existing batch or semi-batch type production equipment that is used in industrial anionic polymerizations.

Unsaturated polyether monol formation can be reduced even in an anionic polymerization process by performing the polymerization at relatively low temperatures, such as 80 to 120°C. Lower polymerization rates are seen at these lower temperatures, which in turn lengthen cycle time, decreases equipment usage rates and increase production costs.

Other methods involve post-treating the polyether to convert the unsaturated polyether monols to diols. The unsaturated group is a reactive site that can be, for example, hydrolyzed in the presence of a strong acid to produce a terminal hydroxyl group, thus converting the polyether monol to a diol. However, conversions are typically low, and large amounts of polyether monols remain in the product. Careful neutralization and removal of reaction by-products is usually needed. JP H04 209628 discloses a process for converting an unsaturated polyoxypropylene polyether monol to a polyol, wherein the unsaturated polyether monol has a polyether chain terminated at one end with a hydroxyl group and at the other end with an allylic or propenyl group, comprising reacting the unsaturated polyether monol with 2-mercaptoethanol.

A more efficient process for production polyethers with low levels of unsaturated polyether monols is desired.

This invention is a process for making a polyether, comprising
a) polymerizing one or more alkylene oxides at a temperature of 80 to 200°C in the presence of at least one polyhydric initiator compound and an alkylene oxide polymerization catalyst to produce a polyether mixture containing polyether polyol molecules and unsaturated polyether monols having a hydroxyl group at an end of a polyether chain; and
b) reacting the polyether mixture with a thiol compound having at least 2 thiol groups, to convert at least a portion of the unsaturated polyether monols coupled polyethers linked by a residue, after removal of thiol hydrogens, of the thiol compound.

This process is an expensive and efficient method to reduce the amount of unsaturated polyether monols in a polyether product. Unlike hydrolytic methods for removing the terminal unsaturation, the thiol compound reacts facilely and rapidly under mild conditions, allowing a high proportion of the unsaturated groups to be removed easily. No reaction by-products that need to be removed from the product are formed in the reaction with the thiol compound.

Because the reaction of the thiol compound with the unsaturated polyether monol proceeds so efficiently, it is not necessary to stringently control polymerization conditions in the first step of the process to minimize the production of unsaturated polyether monols.

Thus, for example, the polyether mixture produced in step a) of the process may contain, for example, as much as 0.5 or more milliequivalents of unsaturated polyether monols per gram of the mixture. This has important and highly beneficial implications, as it allows, for example, step a) of the process to be performed at somewhat high polymerization temperatures and/or in the presence of strong base catalysts. The ability to use high polymerization temperatures and/or inexpensive strong base catalysts allows for reduced cycle times and/or catalyst costs, while still producing products nearly devoid of undesired unsaturated polyether monols. Nonetheless, the process may be used to remove unsaturated polyether monols from a polyether mixture that contains very low amounts, for example as little as 0.002 milliequivalents per gram, of the unsaturated polyether monols.

The products of this process are useful for making polyurethanes by reaction with a polyisocyanate. In cases in which the functional group provided by the thiol compound is isocyanate-reactive, and/or in which the unsaturated polyether monols are coupled, the unsaturated polyether monols are converted to species that react polyfunctionally with polyisocyanates. This avoids the problem of chain termination caused by the presence of unsaturated polyether monols in a polyether mixture.

The step of polymerizing the alkylene oxide(s) is performed by combining the alkylene oxide(s) with at least one polyhydric initiator compound and an alkylene oxide polymerization catalyst, and subjecting the mixture to polymerization conditions including a temperature of 80 to 200°C. The polymerization is generally conducted under superatmospheric pressure to maintain the alkylene oxide(s) in condensed form.

The alkylene oxide may be, for example, one or more of ethylene oxide, 1,2-propylene oxide, 1,2-butylene oxide, 2,3-butylene oxide, styrene oxide, 1,2-hexylene oxide, tetrahydrofuran or other cyclic ether. If two or more different alkylene oxides are polymerized, they can be polymerized as a mixture to form a random or pseudo-random copolymer, and/or polymerized sequentially to form a block copolymer.

The step of polymerizing the alkylene oxide(s) may be performed in two or more stages in which the composition of the alkylene oxide(s) polymerized is changed in each successive stage.

The invention is of particular interest when the alkylene oxide is or includes 1,2-propylene oxide, as 1,2-propylene oxide is especially susceptible to isomerization to allylic or propenyl alcohol. The polymerization thereof tends to produce higher quantities of unsaturated polyether monols than the polymerization of other alkylene oxides. Therefore, the alkylene oxide in some embodiments includes at least 50% or at least 70% by weight propylene oxide, and may include up to 100% by 1,2-propylene oxide.

In a particular embodiment, the alkylene oxide is 1,2-propylene oxide by itself. In another particular embodiment, the alkylene oxide is a mixture of 90 to 99.5 weight-% by weight 1,2-propylene oxide and correspondingly 0.5 to 10 weight-% ethylene oxide. In another particular embodiment, the polymerization of the alkylene oxide(s) is performed in stages, wherein in the first stage 100 weight-% propylene oxide or a mixture of 90 to 99.5 weight-% propylene oxide and correspondingly 0.5 to 10 ethylene oxide is polymerized and in a subsequent stage 100 weight-% ethylene oxide or a mixture of 75 to 100 weight-% and 0 to 25 weight-% propylene oxide is polymerized, to form a block copolymer.

The initiator is a compound having two or more oxyalkylatable hydrogen atoms and a molecular weight of up to 750. The molecular weight of the initiator compound is in some embodiments at least 18, at least 50 or at least 75, and up to 500, up to 250, up to 150 or up to 100. The initiator in some embodiments has up to 8, up to 6, up to 4 or up to 3 oxyalkylatable hydrogen atoms. The oxyalkylatable hydrogen atoms may be, for example, hydroxyl hydrogens or amine hydrogens. Suitable initiators include polyols, primary amine compounds, secondary amine compounds that have at least two secondary amino groups or at least one secondary amino group and at least one primary amino group, and aminoalcohols. Specific examples of suitable initiators include, for example, water, ethylene glycol, 1,2- or 1,3-propane diol, 1,4-butane diol, diethylene glycol, triethylene glycol, dipropylene glycol, tripropylene glycol, glycerine, trimethylolpropane, trimethylolethane, pentaerythritol, sorbitol, sucrose N-methyldiethanolamine, N-methyldipropanolamine, N-(2-hydroxyethyl)-N-methyl-1,3-propane diamine 3,3'-diamino-N-methyldipropylamine, 3,3'-diamino-N-ethyldipropylamine and 2,2'-diamino-N-methyldiethylamine and N-(2-hydroxyethyl)-N-methyl-1,2-ethane diamine, or alkoxylated derivatives of any of the foregoing having molecular weights as described above. A mixture of two or more initiator compounds can be used.

Enough of the alkylene oxide(s) is polymerized to produce a polyether mixture having a number average molecular weight of, for example, 200 to 20,000 by gel permeation chromatography. In some embodiments, the polyether mixture has a number average molecular weight of at least 500, at least 1000, at least 1500, at least 2000, at least 3000 or at least 4500. The number average molecular weight may be up to 10,000, up to 8,000 or up to 6,000. Alkylene oxide isomerization to unsaturated alcohols tends to increase with the longer polymerization times needed to produce higher equivalent weight polyethers. Therefore, the invention is of particular interest when the polyether mixture produced in step (a) of the process has a number average molecular weight of at least 1500, especially at least 2000.

The polymerization catalyst in some embodiments is a double metal cyanide catalyst complex. Suitable double metal cyanide catalysts include those described, for example, in U.S. Patent Nos. 3,278,457, 3,278,458, 3,278,459, 3,404,109, 3,427,256, 3,427,334, 3,427,335 and 5,470,813. Some suitable DMC catalysts can be represented by the formula

M_{b}[M¹(CN)ᵣ(X)ₜ]_{c}[M²(X)₆]_{d} · nM³ₓA_{y}

wherein M and M³ are each metals; M¹ is a transition metal different from M, each X represents a group other than cyanide that coordinates with the M¹ ion; M² is a transition metal; A represents an anion; b, c and d are numbers that reflect an electrostatically neutral complex; r is from 4 to 6; t is from 0 to 2; x and y are integers that balance the charges in the metal salt M³ₓA_{y}, and n is zero or a positive integer. The foregoing formula does not reflect the presence of neutral complexing agents such as t-butanol which are often present in the DMC catalyst complex.

An especially preferred type of DMC catalyst is a zinc hexacyanocolbaltate complexed with t-butanol.

Strong bases, such as quaternary amine compounds, alkali metal hydroxides, alkali metal alkoxides, alkaline earth hydroxides and alkaline earth alkoxides, are also useful alkylene oxide polymerization catalysts for use in the invention. Among these, potassium hydroxide and potassium alkoxides, especially potassium hydroxide, are of particular interest in this invention, as these catalysts are widely used, are inexpensive, provide reasonably fast polymerization rates, and tend to promote the isomerization of alkylene oxides more than many other alkylene oxide polymerization catalysts.

The polyether mixture produced in step a) of the process contains unsaturated polyether monols. The amount of these unsaturated polyether monols in a polyether mixture is generally determined by measuring the amount of unsaturated groups in the sample and dividing by the weight of the sample. As each unsaturated polyether monol molecule contains exactly one unsaturated group, the number of equivalents of unsaturated groups represents the amount of unsaturated polyether monols. The measured unsaturation, and hence the amount of unsaturated polyether monols, in the polyether mixture produced in step a) of the process may be at least 0.002 milliequivalent per gram of sample (meq/g), at least 0.01 meq/g, at least 0.05 meq/g or at least 0.1 meq/g, and may be as much as 0.5 meq/g or as much as 0.25 meq/g.

In embodiments of particular interest, the polyether mixture produced in step a) has a number average molecular weight of at least 2000, especially at least 3000, and at least 0.05, especially at least 0.1 meq/g of unsaturated polyether monols. The thiol compound may contain any greater number of functional groups, but preferably contains up to 10, up to 5, up to 3 or up to 2 such functional groups. By "functional group", it is meant aliphatic carbon-carbon unsaturation, an aromatic group or a non-aromatic, heteroatom-containing group other than a thiol group. The functional group is less reactive with the unsaturated group of the unsaturated polyether monol (under the conditions used in step b) of the process) than the thiol group, so the thiol group reacts preferentially with such unsaturated group.

The functional group(s) may be, for example, one or more of hydroxyl, primary amino, secondary amino, tertiary amino, ammonium, phosphonium, phosphate, phosphonate, halo (such as fluoro, chloro, bromo or iodo), carboxyl, carboxylate, nitro, nitroso, allyl, propenyl, ethylenyl, silyl, siloxyl, phenyl or other aryl groups. Hydroxyl groups are especially preferred.

The molecular weight of the thiol compound in some embodiments is up to 500, up to 300, up to 200 or up to 100.

The thiol compound has two or more thiol groups. The thiol compound in addition may or may not have one or more functional groups as described above. When the thiol compound has two or more thiol groups, each of them can react with a molecule of the unsaturated polyether monol to form coupled molecules which generally will be polyols. The number of hydroxyl groups on such coupled molecules is generally equal to the number of thiol groups on the thiol compound, plus the number of hydroxyl groups (if any) on the thiol compound.

In step b) of the reaction, the amount of thiol compound provided may be sufficient to provide 0.1 to 5 equivalents of the thiol compound per equivalent of unsaturated polyether monol present in the polyether mixture formed in step a). At least 0.5, at least 0.75 or at least 0.9 equivalents of thiol compound may be provided per equivalent of unsaturated polyether monol. In general, there is no need to provide more than a small excess of the thiol compound, so a preferred amount is up to 1.5, up to 1.1 or up to 1.05 equivalents of thiol compound per equivalent of unsaturated polyether monol. If it is desired to convert less than all of the unsaturated polyether monols, less than 1 equivalent of the thiol compound can be used per equivalent of unsaturated polyether monol.

The reaction of the thiol compound with the polyether mixture can be performed in the presence of a catalyst or free-radical initiator, if desired.

Suitable catalysts include basic compounds capable of directly or indirectly extracting a hydrogen from a thiol group to form a thiolate anion. In some embodiments, the basic catalyst does not contain thiol groups and/or amine hydrogens. Such a basic catalyst preferably is the conjugate base of a material having a pKa of at least 5, preferably at least 10. Examples of these include inorganic compounds such as salts of a strong base and a weak acid, of which potassium carbonate and potassium carboxylates are examples, various amine compounds, and various phosphines.

Suitable amine catalysts include various tertiary amine compounds, cyclic amidine compounds such as 1,8-diazabicyclo-5.4.0-undecene-7, tertiary aminophenol compounds, benzyl tertiary amine compounds, imidazole compounds, or mixtures of any two or more thereof. Tertiary aminophenol compounds contain one or more phenolic groups and one or more tertiary amino groups. Examples of tertiary aminophenol compounds include mono-, bis- and tris(dimethylaminomethyl)phenol, as well as mixtures of two or more of these. Benzyl tertiary amine compounds are compounds having a tertiary nitrogen atom, in which at least one of the substituents on the tertiary nitrogen atom is a benzyl or substituted benzyl group. An example of a useful benzyl tertiary amine compound is N,N-dimethyl benzylamine.

Imidazole compounds contain one or more imidazole groups. Examples of imidazole compounds include, for example, imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-undecylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']ethyl-s-triazine, 2,4-diamino-6- [2'-ethylimidazolyl-(1)']ethyl-s-triazine, 2,4-diamino-6- [2' -undecylimidazolyl- (1)'] ethyl- s-triazine, 2-methylimidazolium- isocyanuric acid adduct, 2-phenylimidazolium-isocyanuric acid adduct, 1-aminoethyl-2-methylimidazole, 2-phenyl-4,5-dihydroxylmethylimidazole, 2-phenyl-4-methyl-5-hydroxymethylimidazole, 2-phenyl-4-benzyl-5-hydroxymethylimidazole, and compounds containing two or more imidazole rings obtained by dehydrating any of the foregoing imidazole compounds or condensing them with formaldehyde.

Other useful basic catalysts include phosphine compounds, *i.e*., compounds having the general formula R³₃P, wherein each R³ is hydrocarbyl or inertly substituted hydrocarbyl. Dimethylphenyl phosphine, trimethyl phosphine, triethylphosphine and the like are examples of such phosphine catalysts.

A suitable amount of a basic catalyst is typically from about 0.01 to about 10 moles of catalyst per equivalent of thiol groups.

Suitable free-radical initiators include thermally decomposable free radical initiators that produce free radicals when heated to a temperature in the range of 50 to 160°C, especially 65 to 120°C and more preferably 70 to 100°C. Such a thermally-decomposable free radical initiator compound may have a 10 minute half-life temperature of 50 to 120°C. Such free-radical initiators include, for example, various peroxy compounds such as peroxides, peresters and percarbonates, and various azo compounds.

The reaction also can be performed by exposing the reaction mixture to conditions that generate free radicals. Free radicals can be provided by, for example, exposing the reaction mixture to a light source, preferably a source of ultraviolet light such as a mercury discharge lamp or a UV-producing LED. The ultraviolet light source may provide UV radiation at an intensity of, for example, 10 mW/cm² to 10 W/cm². In other embodiments, free radicals are provided by exposing the reaction mixture to a plasma.

The reaction conditions used depend somewhat on the method of catalysis. When using basic catalyst, preferred conditions include an elevated temperature, such as 50 to 120°C, especially 70 to 100°C, for a period of 10 minutes to five hours, preferably 30 to 150 minutes. When a free-radical initiator is used, the temperature is sufficient to thermally decompose the initiator, as described above, and the reaction time may be as described with respect to the base-catalyzed reactions. Photo-initiated and/or plasma-induced reactions may be performed at temperatures of 10°C or even lower, up to 100°C, preferably 20°C to 40°C, with reaction times being as for base- or free-radical-induced reactions.

The progress of the reaction and formation of the reaction product of the thiol compound and the unsaturated polyether monol can be followed by C¹³ NMR, with the progress of the reaction being indicated by the disappearance of resonances corresponding to allyl and/or propenyl carbons as appropriate.

The reaction of the thiol compound with the unsaturated group of the unsaturated polyether monol is an addition reaction. For that reason, the reaction forms no by-products that need to be removed from the product obtained in step b) of the process. It is usually desirable to remove volatiles and other impurities from the polyether mixture formed in step a) of the process. This can be done using various devolatilization and/or stripping processes, and can be done either before or after performing step b).

The product obtained in the process is a polyol composition that includes a mixture of polyether polyols formed in step a) of the process with coupled polyethers linked by a residue, after removal of thiol hydrogens, of the thiol compound.

In step b), the amount of unsaturated polyether monols in the mixture of polyether polyols may be reduced by at least 25%, by at least 50%, at least 75%, at least 90%, at least 95% or at least 98%, to as much as 100%. The product resulting from step b) may contain, for example up to 0.05 meq/g, up to 0.01 meq/g, up to 0.005 meq/g, up to 0.002 meq/g or up to 0.001 meq/g of unsaturated polyether monols.

The polyol mixture is useful for making reaction polymers by reaction with one or more polyisocyanate compounds. These reaction polymers are known in the art generally as "polyurethanes" and include polymers having urethane groups formed in the reaction of the hydroxyl groups of the polyol mixture with isocyanate groups, and may contain other groups formed in the reaction of isocyanate groups. The reaction may be performed in the presence of a blowing agent, which may be a physical (endothermic) type or a chemical (exothermic) type such as water or other compound that generates carbon dioxide or nitrogen under the conditions of the curing reaction. The reaction polymer may be, for example, a non-cellular elastomer, a microcellular elastomer, a flexible foam, a semi-flexible foam, a rigid foam, or a thermoplastic. The reaction polymer may be, for example, an adhesive, a sealant, a gasket, a dynamic elastomer, a thermal insulating foam, a cushioning foam, a structural foam or an injection-molded article. The reaction particle may be reinforced with fibers or other reinforcements.

The following examples are provided to illustrate the invention, but are not intended to limit the scope thereof. All parts and percentages are by weight unless otherwise indicated.

### Examples 1-5 and Comparative Samples A and B

An allyl alcohol-initiated, 200 molecular weight poly(ethylene oxide) (Polyether A) is used as a model compound. On C¹³ NMR, this material (Comparative Sample A) exhibits resonances corresponding to the allylic carbons, at about 116 and 135 ppm relative to tetramethylsilane.

To produce Example 1, Polyether A is combined with an approximately equal number of equivalents of 1-thioglycerol and about 5% by weight, based on the weight of 1-thioglycerol, of tert-amyl peroxy-2-ethylhexanoate (Trigonox® 121 from Akzo Nobel Industrial Chemicals). The mixture is heated under nitrogen to 90°C for 2 hours, and then allowed to cool to room temperature. C¹³ NMR indicates the complete disappearance of allylic carbons, indicating that all of the starting material had been converted to a triol, in which two of the three hydroxyl groups have been supplied by the 1-thioglycerol.

Example 2 is made in the same general manner, substituting 2-mercaptoethanol for the 1-thioglycerol. C¹³ NMR again indicates complete disappearance of the allylic carbons. The product is a diol.

To produce Example 3, Polyether A is combined with an approximately equal number of equivalents of 1-thioglycerol. 2,2-dimethoxy-2-phenylacetophenone is added as a photo-triggered radical initiator, in about 5-6 wt.-%, based on the weight of 1-thioglycerol. The mixture is stirred at room temperature for 2 hours under a UV light intensity of 6W (Philips TL 6W08). Complete disappearance of the allylic carbons is seen on C¹³ NMR indicating the formation of a triol.

Example 4 is made in the same general manner as Example 1, except the catalyst is Trigonox 121 (about 5%, based on the thiol compound), and the reaction conditions are 65°C for 5 hours. Complete disappearance of the allylic carbons is seen on C¹³ NMR indicating the formation of a triol.

A quantity of Comparative Sample A is heated at 150°C in the presence of a palladium/carbon catalyst to isomerize a portion of the allyl groups to propenyl groups (Comparative Sample B). C¹³ NMR indicates the presence of allylic carbon resonances at about 116 and 136 ppm, and in addition the presence of propenyl hydrogen resonances at about 10 and 146 ppm.

Example 5 is made by reacting approximately stoichiometric amounts of Comparative Sample B and 2-mercaptoethanol in the presence of Trigonox 121 for 3 days at 90°C. Complete loss of the allylic carbon signals is seen on C¹³ NMR, indicating the formation of a triol. Examples 1-5 are comparative.

### Examples 5 and 6 and Comparative Samples C and D

Comparative Sample C is an approximately 6000 molecular weight glycerine-initiated poly(propylene oxide) end-capped with ethylene oxide. Comparative Sample C has 0.025 meq/g of propenyl unsaturation and 0.048 meq/g of allylic unsaturation, for a total unsaturated polyether monol content of 0.073 meq/g. Its hydroxyl number is 27.4.

A quantity of Comparative Sample C is treated with 2-mercaptoethanol in the same general manner as described in Example 2. C¹³ NMR of the treated product (Example 5) shows a complete disappearance of allylic carbon resonances. The hydroxyl number of Example 5 increases to 31.8 meq/g. Example 5 is a mixture of a polyether triol with about 0.07 meq/g of polyether diols corresponding to the reaction product of the mercaptoethanol and unsaturated polyether monols in Comparative Sample C.

Comparative Sample D is an approximately 6000 molecular weight glycerine-initiated poly(propylene oxide) end-capped with ethylene oxide. Comparative Sample C has 0.002 meq/g of propenyl unsaturation and 0.153 meq/g of allylic unsaturation, for a total unsaturated polyether monol content of 0.155 meq/g. Its hydroxyl number is 32.4. Example 6 is made from Comparative Sample D, in the same general manner as described for Example 5. The C¹³ NMR of Example 6 shows complete disappearance of the allylic carbon resonances. The hydroxyl number of Example 6 is increased to 38.3. Example 6 is a mixture of a polyether triol with about 0.13 meq/g of polyether diols corresponding to the reaction product of the mercaptoethanol and unsaturated polyether monols in Comparative Sample D.

Comparative Samples C and D and Examples 5 and 6 each are evaluated in a model polyurethane foam system. Tack-free time is measured in each case by applying a spatula to the surface of the reaction mixture periodically is it rises and cures, until such time as the reaction mixture no longer sticks to the spatula (the tack-free time). The tack-free time for the foam made with Comparative Sample C is 48 seconds. That for Example 5 is 45 seconds, which is consistent with a higher average hydroxyl functionality due to the conversion of monols to diols via the treatment with mercaptoethanol. The tack-free time of the foam made with Comparative Sample D is 47 seconds, and that of Example 6 is only 45 seconds, again consistent with the removal of monols from the material.

## Claims

1. A process for making a polyether, comprising
a) polymerizing one or more alkylene oxides at a temperature of 80 to 200°C in the presence of at least one polyhydric initiator compound and an alkylene oxide polymerization catalyst to produce a polyether mixture containing polyether polyol molecules and unsaturated polyether monols having a hydroxyl group at an end of a polyether chain; and
b) reacting the polyether mixture with a thiol compound having at least 2 thiol groups, to convert at least a portion of the unsaturated polyether monols to coupled polyethers linked by a residue, after removal of thiol hydrogens, of the thiol compound.

2. The process of claim 1, wherein the polyether mixture produced in step a) contains at least 0.05 meq of unsaturated polyether monols per gram of the polyether mixture measured as indicated in the description.

3. The process of claim 1 or 2, wherein the one or more alkylene oxides is 1,2-propylene oxide by itself or a mixture of 90 to 99.5 weight-% 1,2-propylene oxide and correspondingly 0.5 to 10 weight-% ethylene oxide.

4. The process of any preceding claims, wherein in step b) the amount of unsaturated polyether monols is reduced by at least 75%, compared to the amount of unsaturated polyether monols in the polyether mixture produced in step a).

## Patentansprüche

1. Ein Verfahren zum Herstellen eines Polyethers, das Folgendes beinhaltet:
a) Polymerisieren eines oder mehrerer Alkylenoxide bei einer Temperatur von 80 bis 200 °C in Gegenwart von mindestens einer mehrwertigen Initiatorverbindung und einem Alkylenoxid-Polymerisationskatalysator, um eine Polyethermischung zu produzieren, die Polyetherpolyolmoleküle und ungesättigte Polyethermonole, die an einem Ende einer Polyetherkette eine Hydroxylgruppe aufweisen, enthält; und
b) Zur-Reaktion-Bringen der Polyethermischung mit einer Thiolverbindung, die mindestens 2 Thiolgruppen aufweist, um mindestens einen Teil der ungesättigten Polyethermonole in gekoppelte Polyether umzuwandeln, die durch einen Rückstand, nach Entfernung von Thiolwasserstoffen, der Thiolverbindung verbunden sind.

2. Verfahren gemäß Anspruch 1, wobei die in Schritt a) produzierte Polyethermischung mindestens 0,05 mEq ungesättigte Polyethermonole pro Gramm der Polyethermischung, gemessen wie in der Beschreibung angegeben, enthält.

3. Verfahren gemäß Anspruch 1 oder 2, wobei das eine oder die mehreren Alkylenoxide 1,2-Propylenoxid für sich oder eine Mischung von 90 bis 99,5 Gew.-% 1,2-Propylenoxid und entsprechend 0,5 bis 10 Gew.-% Ethylenoxid sind.

4. Verfahren gemäß einem der vorhergehenden Ansprüche, wobei in Schritt b) die Menge an ungesättigten Polyethermonolen im Vergleich zu der Menge an ungesättigten Polyethermonolen in der in Schritt a) produzierten Polyethermischung um mindestens 75 % reduziert ist.

## Revendications

1. Un procédé pour fabriquer un polyéther, comprenant
a) la polymérisation d'un ou de plusieurs oxydes d'alkylène à une température de 80 à 200 °C en présence d'au moins un composé initiateur polyhydrique et d'un catalyseur de polymérisation d'oxyde d'alkylène afin de produire un mélange de polyéther contenant des molécules de polyol de polyéther et des monols de polyéther insaturés ayant un groupe hydroxyle à une extrémité d'une chaîne polyéther ; et
b) la mise en réaction du mélange de polyéther avec un composé thiol ayant au moins 2 groupes thiol, afin de convertir au moins une portion des monols de polyéther insaturés en des polyéthers couplés liés par un résidu, après retrait d'hydrogènes thiol, du composé thiol.

2. Le procédé de la revendication 1, dans lequel le mélange de polyéther produit à l'étape a) contient au moins 0,05 méq de monols de polyéther insaturés par gramme du mélange de polyéther mesuré tel qu'indiqué dans la description.

3. Le procédé de la revendication 1 ou de la revendication 2, dans lequel les un ou plusieurs oxydes d'alkylène sont le 1,2-oxyde de propylène tout seul ou un mélange de 90 à 99,5 % en poids de 1,2-oxyde de propylène et proportionnellement de 0,5 à 10 % en poids d'oxyde d'éthylène.

4. Le procédé de n'importe quelles revendications précédentes, dans lequel à l'étape b) la quantité de monols de polyéther insaturés est réduite d'au moins 75 %, comparée à la quantité de monols de polyéther insaturés dans le mélange de polyéther produit à l'étape a).
